# EUROPEAN PATENT APPLICATION

(11) **EP 4 683 333 A1**
(43) Date of publication of application: **21.01.2026**
(21) Application number: 25189714.6
(22) Date of filing: 15.07.2025
(51) Int. Cl.: H04N 21/472, H04N 21/83, H04N 21/85

(54) **INTERACTIVE GUIDED VIDEO WATCHING**

(30) Priority: 15.07.2024 US 202463671651 P
(71) Applicant: GOOGLE LLC, Mountain View CA 94043 (US)
(72) Inventor: CHI, Pei-yu, Mountain View, 94043 (US); HU, Sen-Po, Mountain View, 94043 (US); SHI, Lei, Mountain View, 94043 (US); ESSA, Irfan Aziz, Mountain View, 94043 (US)
(74) Representative: Marks & Clerk GST

(57) **Abstract**

Methods, systems, and apparatuses, including computer programs encoded on computer storage media, for processing a video to generate guided content. Then presenting the guided content during video playback along with responses to user queries. In particular, the described techniques use multi-modal neural networks to process the video to generate summaries, question prompts, responses to question prompts, and responses to user queries that take into account video context, previous user queries, or both. As a result, the described techniques increase video playback efficiency by presenting engaging guided content that enhance user video playback experience and by presenting responses to user queries that are maximally relevant to the user in real-time.

## Description

### BACKGROUND

This specification relates to processing inputs using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current value inputs of a respective set of parameters.

### SUMMARY

This specification describes a system implemented as computer programs on one or more computers in one or more locations that processes a video to generate guided content and, during playback of the video by a user on a user device, presents the guided content. The video can be, for example, a video of a real-world environment. Examples of guided content include summaries, question prompts, and respective responses to the question prompts. The question prompts can be, for example, related to video question-answering and can ask about, for example, objects in the video (e.g., object existence, object identification, object position), actions in the video (e.g., action recognition), understanding of the video (e.g., what is happening in the video), and so on.

Particular embodiments of the subject matter described in this specification can be implemented so as to realize one or more of the following advantages.

Video playback can provide useful content to users through auditory and visual guidance on various technical or instructional topics. For example, video playback of a cookie baking tutorial can provide a user with guidance on how to bake cookies.

Although video playback can provide users with useful content, for videos with longer length or in-depth knowledge, users often need to repeatedly navigate the video (i.e., skip forward, rewind, or stop/pause the video playback) in order to find relevant content or to try to understand the relevant content. Such navigation of the video is computationally inefficient.

For example, such video navigation causes total video playback time to be extended (e.g., total video playback time increases due to repeated video playback) and, therefore, causes greater computational cost to playback the video. For example, if the video is streamed from a server and presented on a user device, such repeated video navigation creates wasteful data transfer between the user device and the server. As another example, repeated video navigation during video playback can cause the central processing unit (CPU) of a user device presenting the video to perform redundant operations (i.e., repeated decoding of video data and/or buffering of the video).

Additionally, such navigation of the video lowers the user's ability to receive useful content. For example, a user that needs to frequently pause and rewind a video to try to understand a portion of the video may not be able to receive the relevant content from the video. As another example, a user that is skipping forwards and backwards throughout a video to find particular content to save the time of watching the video in its entirety may not be able to find the relevant content. Ultimately, this wasteful navigation is a barrier to a user's ability to receive useful content from a video and, in some cases, can result in the user never receiving the useful content from the video.

This specification describes techniques that can address the aforementioned challenges. That is, this specification describes techniques for interactive video playback that offer significant advantages for a variety of video types, e.g., tutorial, educational, training, entertainment, etc., by presenting guided content such as summaries and question prompts with corresponding responses. The described techniques increase the efficiency of video playback by providing useful content to users and enhancing the user experience when viewing a video so that the user remains engaged with the video and does not need to pause or stop the video.

The guided content summaries enable users to quickly gather key points and understand potentially complex and lengthy presentations. The guided content summaries also allow a user to easily identify relevant video segments for viewing and to skip to that segment during playback.

Additionally, the guided content question prompts, and corresponding responses, help maintain user engagement so that they can receive the relevant content from the video. Another advantage is that, because the user does not have to generate the question prompt, the user can more quickly receive relevant content and return to the video playback. Thus, total playback time of the video is minimized and therefore total computational cost of video playback is minimized.

Also, because the guided content is generated prior to video playback, the latency associated with presenting the guided content is significantly reduced. The guided content for the video can also be cached (i.e., stored in system maintained data for later use), which allows the same guided content to be reused (e.g., when presenting the same video to multiple users on different user devices), which reduces computational cost of generating guided content for each user for the same video, thus saving computational resources.

In addition to presenting guided content, the described techniques can process user submitted queries about the video, while automatically considering the context of the video playback and the user's previous interaction with the video playback (e.g., previous user queries and response). Processing user queries in this manner improves user video playback experience, by providing responses to the queries that are tailored to the user and video context.

In addition to presenting guided content and processing user queries, the described techniques can process user input selecting content that is presented to the user and then present additional question prompts (with appropriate responses) to the user, while automatically considering the context of the video playback and the user's previous interaction with the video playback (e.g., previous user queries and response). Processing user inputs in this manner improves user video playback experience, by providing relevant additional question prompts that are tailored to the user and video context without the need for the user to input a complete query.

The described technique can be integrated within a variety of settings. As just some examples, the described techniques can be integrated into online video sharing platforms, video streaming platforms, and workplace training videos, where it is automatically applied to each video in the respective repositories.

As a result of integrating the described techniques into these settings, the described techniques enhance computational efficiency of interactive guided video presentation. For example, computational efficiency is increased through the reduction of wasted CPU cycles (because a user no longer needs to pause or rewind video presentation, which eliminates video reprocessing). As another example, the pre-computation of guided content prior to video presentation lowers latency of presenting guided content during video playback and (because guided content needs only be generated once per video) eliminates wasteful regeneration per video playback.

As another consequence of integrating the described techniques into these settings, user experience of the video playback for these videos is enhanced, when compared to the presentation of the non-interactive guided video. Presentation of guided content enhance comprehension of the video while also delivering relevant content. But also the generation and presentation of additional question prompts, respective responses to additional question prompts, and responses to user queries during video playback that takes into account video context and previous user interactions (e.g., previous user queries) provide the user with additional relevant, custom, content.

The details of one or more embodiments of the subject matter of this specification are set forth in the accompanying drawings and the description below.

According to a first aspect there is provided a method performed by one or more computers. The method includes obtaining a video and processing the video using a first multi-modal neural network to generate respective guided content corresponding to each of a plurality of time segments in the video. Then the method includes, during playback of the video by a user on a user device and for each of the plurality of time segments, presenting, in a user interface on the user device, the respective guided content corresponding to the time segment when the playback of the video reaches the corresponding time segment.

In some implementations, the respective guided content corresponding to each of the plurality of time segments includes a summary of the video during the time segment. Additionally, presenting, in a user interface on the user device, the respective guided content corresponding to the time segment when the playback of the video reaches the corresponding time segment includes presenting the respective summary of the time segment.

In some implementations, processing the video using a first multi-modal neural network to generate respective guided content corresponding to each of a plurality of time segments in the video includes, for one or more of the time segments, processing an input that includes a text transcript of the video during the time segment using the first multi-modal neural network to generate the respective summary of the time segment.

In some cases, the plurality of time segments includes a first time segment that spans the entire video. Additionally, processing the video using a first multi-modal neural network to generate respective guided content corresponding to each of a plurality of time segments in the video includes, for the first time segment, processing an input that includes the video to generate the respective summary of the first time segment.

In some cases, the respective guided content corresponding to each of the plurality of time segments includes one or more question prompts that relate to content of the video during the time segment. Additionally, presenting, in a user interface on the user device, the respective guided content corresponding to the time segment when the playback of the video reaches the corresponding time segment includes presenting the one or more question prompts.

In some cases, processing the video using a first multi-modal neural network to generate respective guided content corresponding to each of a plurality of time segments in the video includes, for one or more of the time segments, processing an input that includes a text transcript of the video during the time segment using the first multi-modal neural network to generate the one or more question prompts for the time segment.

In some implementations, the plurality of time segments includes a first time segment that spans the entire video. Additionally, processing the video using a first multi-modal neural network to generate respective guided content corresponding to each of a plurality of time segments in the video includes, for the first time segment, processing an input that includes the video to generate the one or more question prompts for the first time segment.

In some implementations, the respective guided content corresponding to each of the plurality of time segments further includes a respective response to each of the one or more question prompts. Additionally, presenting, in a user interface on the user device, the respective guided content corresponding to the time segment when the playback of the video reaches the corresponding time segment includes presenting the one or more question prompts and further includes receiving a user input selecting a particular question prompt for a particular time segment. Then it includes, in response to receiving the user input, presenting, in the user interface, the respective response to the particular question prompt.

In some cases, the user interface includes one or more user interface elements that allow the user to submit queries about the video while the video is presented for playback.

In some implementations, the method further includes receiving, through the one or more user interface elements, a user query. Then, generating an input that includes the user query and context from the video. Afterwards, providing the input that includes the user query and context from the video to a second multi-modal neural network to obtain, as output, a response to the user query. Then, providing the response for presentation in one of the one or more user interface elements.

In some cases, the input that includes the user query and context from the video further includes one or more previous user queries, one or more previous responses to the one or more previous user queries, or both.

In some implementations, the method further includes, during playback of the video by a user on a user device, receiving a user input selecting content that is presented in the user interface. Then, generating an input that includes the selected content and context from the video. Then, providing the input that includes the selected content and context from the video to a second multi-modal neural network to obtain, as output, one or more additional question prompts relating to the selected content. Then, providing the one or more additional question prompts for presentation in the user interface.

In some cases, the input that includes the selected content and context from the video further includes one or more previous user queries, one or more previous responses to the one or more previous user queries, or both.

In some implementations, the method further includes receiving a user input selecting one of the additional question prompts. Then, generating an input that includes the selected additional question prompt and context from the video. Afterwards, providing the input that includes the selected additional question prompt and context from the video to the second multi-modal neural network to obtain, as output, one or more responses to the additional question prompt. Then, providing the one or more responses to the additional question prompt for presentation in the user interface.

In some implementations, the method further includes generating data specifying the plurality of time segments by processing (yet another) input that includes a transcript of the video using the first multi-modal neural network.

In some cases, processing (yet another) input that includes a transcript of the video using the first multi-modal neural network includes obtaining, as output from the neural network, data identifying a respective set of sentences to be included in each of the time segments. Then, for each time segment, mapping the respective set of sentences to a corresponding time interval within the video.

According to a second aspect there is provided the methods of the first aspect performed by a system that includes one or more computers and one or more storage devices storing instructions that, when executed by the one or more computers, cause the one or more computers to perform the respective operations of the respective method.

According to a third aspect there is provided the methods of the first aspect performed by one or more computer storage media storing instructions that when executed by one or more computers cause the one or more computers to perform the respective operations of the respective method.

Other features, aspects, and advantages of the subject matter will become apparent from the description, the drawings, and the claims.

### BRIEF DESCRIPTION OF THE DRAWINGS

FIG. 1 shows an interactive video guiding system.
FIG. 2 is a flow diagram of an example process for processing a video to generate respective guided content and then presenting the respective guided content during playback of the video by a user.
FIG. 3 shows an example of presented guided content.
FIG. 4 shows an example of presented additional question prompts.
FIG. 5 shows an example of presented guided content, additional question prompts, and responses to additional question prompts.

Like reference numbers and designations in the various drawings indicate like elements.

### DETAILED DESCRIPTION

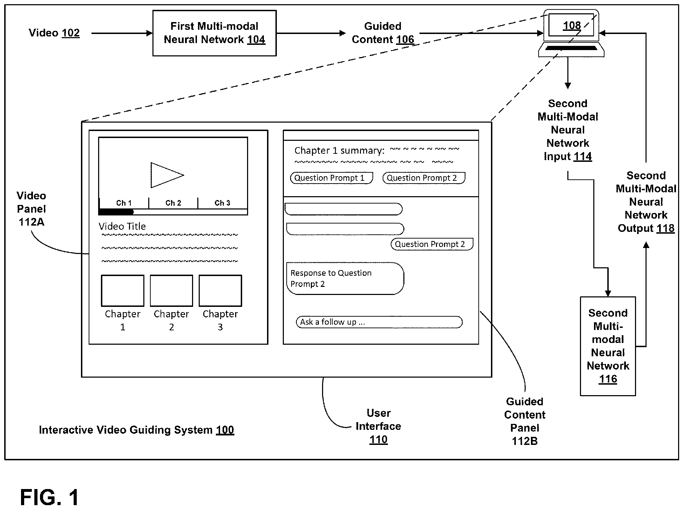

FIG. 1 shows an example interactive video guiding system 100. The system 100 is an example of a system implemented as computer programs on one or more computers in one or more locations, in which the systems, components, and techniques described below can be implemented.

The interactive video guiding system 100 processes a video 102 to generate guided content 106 and, during playback of the video 102 by a user on a user device 108, presents the guided content 106. The user device 108 can be any of a variety of user devices that can perform video playback and present guided content, such as a smartphone, a laptop, a desktop computer, a tablet, and so on.

That is, the system 100 obtains a video 102. Then the system 100 processes the video 102 using a first multi-modal neural network 104 to generate respective guided content 106 corresponding to each of multiple time segments in the video 102. Afterwards, the system 100, during playback of the video 102 by a user on a user device 108 and for each of the multiple time segments, presents, in a user interface 110 on the user device 108, the respective guided content 106 corresponding to the time segment when the playback of the video 102 reaches the corresponding time segment.

FIG. 1 shows an example of the user device 108 as a laptop and an example of the user interface 110 as the laptop display. The user interface 110 includes elements such as a video panel 112A that presents the video playback along with video metadata (e.g., video title, video description, video chapter thumbnails, and so on). The user interface 110 also includes a guided content panel 112B that presents the respective guided content 106 corresponding to the time segment when the playback of the video 102 reaches the corresponding time segment.

The obtained video 102 can be any appropriate video from any appropriate source created through any appropriate mode that can be accessed for playback on one or more computers. For example, the system 100 can obtain the video 102 from a single user, multiple users, or computer systems; the video 102 can have been captured with cameras, screen recordings, or created synthetically using computer graphics, animations, or artificial intelligence techniques.

The system 100 processes the video 102 using a first multi-modal neural network 104 to generate respective guided content 106 corresponding to each of a plurality of time segments in the video 102. That is, the system 100, for one or more of the time segments, processes an input that includes the video 102 during the time segment using the first multi-modal neural network 104 to generate the respective guided content 106 for the time segment.

Generally, the first multi-modal neural network 104 can be any appropriate neural network that can process inputs of one or more modalities (i.e., text, image, videos, audio, and so on) to generate an output of one or more modalities. For example, the first multi-modal neural network 104 can process an input that includes video frames, video transcript, video audio, and natural language text to generate an output that includes natural language text. Further details of the first multi-modal neural network 104 are described below.

Generally, a time segment in the video 102 is a time interval (i.e., a window of time between a start time and an end time) of a portion of the video 102 timeline, and the plurality of time segments are partitions of the entire video 102 timeline. In some cases, the plurality of time segments can overlap in time. For example, one time segment can correspond to the entirety of the video 102 and another time segment can correspond to just the beginning portion of the video 102.

In some implementations, the system 100 determines data specifying the plurality of time segments in the video 102 based on metadata of the video 102. For example, metadata of the video 102 can include a list of time intervals that correspond to video chapters or segments.

In other implementations the system 100 determines data specifying the plurality of time segments in the video 102 using the first multi-modal neural network 104.

For example, the system 100 can process an input that includes the video 102 using the first multi-modal neural network 104 to generate data specifying the plurality of time segments. As a particular example, the system 100 can process an input that includes the video 102 along with natural language instructions of how to determine the time segments, which enables customizable time segmentation, to generate an output that includes the time segments of the video.

In some cases, the system 100 can generate data specifying the plurality of time segments, including a time segment that spans the entire video 102, by processing an input that includes a transcript of the video 102 using the first multi-modal neural network 104.

As a particular example, the system 100 can process an input that includes the transcript of the video 102 along with natural language instructions of how to determine the time segments, which enables customizable time segmentation, to generate an output that includes the time segments of the video 102.

The respective guided content 106 corresponding to each of the plurality of time segments in the video 102 can include a summary of the video 102 during the time segment, one or more pairs consisting of a question prompt and its corresponding response of the video 102 during the time segment, or both.

As a particular example of the system 100 processing an input that includes the video 102 during a time segment using the first multi-modal neural network 104 to generate the respective guided content 106 for the time segment, the system 100 can process an input that includes the video 102 during the time segment (e.g., one or more sampled video frames or selected video frames during the time segment, i.e., image data), accompanying audio to the video 102 during the time segment (i.e., audio data), the video title (i.e., text data), the video creator's name (i.e., text data), and instructions (i.e., text data) using the first multi-modal neural network 104 to generate guided content 106. The guided content 106 can be represented as text data (i.e., text representation of a summary of the video 102 during the time segment or text representations of question prompts and respective responses to the question prompts).

In some cases, to generate the guided content 106, the system 100 processes an input that includes a text transcript of the video 102 using the first multi-modal neural network 104.

As a particular example, to generate a respective summary for a time segment, the system 100 can process an input that includes relevant text transcript of the video 102 during the time segment and instructions to summarize the relevant text transcript using the first multi-modal neural network 104 to generate the summary.

As another particular example, to generate respective one or more question prompts for a time segment, the system 100 can process an input that includes relevant text transcript of the video 102 during the time segment and instructions to generate one or more question prompts from the relevant text transcript using the first multi-modal neural network 104 to generate the one or more question prompts.

As another particular example, to generate respective one or more respective responses to the one or more question prompts for a time segment, the system 100 can process an input that includes relevant text transcript of the video 102 during the time segment and instructions to generate one or more question prompts along with respective response to the one or more question prompts from the relevant text transcript using the first multi-modal neural network 104 to generate respective one or more respective responses to the one or more question prompts .

In some implementations, the system 100 determines the relevant text transcript for each time segment when the system 100 determines time segments for the video 102 by processing an input that includes the transcript of the video 102. That is, after the system 100 generates data specifying the plurality of time segments by processing an input that includes a transcript of the video 102 using the first multi-modal neural network 104, the system 100 can also obtain, as output from the first multi-modal neural network 104, data identifying a respective set of sentences of the transcript to be included in each of the time segments.

In some cases, the system 100 processes the video 102 in its entirety using the first multi-modal neural network 104 to generate guided content for a time segment that spans the entire video 102.

For example, to generate a summary of a time segment that spans the entire video 102, the system 100 can process, as input, the entire video 102 using the first multi-modal neural network 104 to generate as output a summary of the time segment.

As another example, to generate one or more question prompts (and respective responses to the one or more question prompts) of a time segment that spans the entire video 102, the system 100 can process, as input, the entire video 102 using the first multi-modal neural network 104 to generate as output one or more question prompts (and respective responses to the one or more question prompts).

In some implementation, after generating guided content 106, the system 100 stores the guided content 106 in system maintained data so that if the system 100 obtains the same video 102 again it does not need to regenerate the guided content 106.

Generally, after generating respective guided content 106, the system 100 will present the guided content 106 during playback of the video 102. That is, the system 100, for each of the plurality of time segments, presents, in a user interface 110 on the user device 108, the respective guided content 106 corresponding to the time segment when the playback of the video 102 reaches the corresponding time segment.

As an example, given a time segment corresponding to an early portion of the video 102 denoted as "chapter 1", FIG. 1 shows the guided content panel 112B of the interface 110 presenting a summary of chapter 1 (i.e., a time segment) and two question prompts (i.e., "Question Prompt 1" and "Question Prompt 2") regarding chapter 1 (i.e., the time segment).

The guided content summaries enable users to quickly gather key points and understand potentially complex and lengthy presentations. Also, the guided content summaries allow a user to easily identify relevant video segments for viewing and to skip to that segment during playback.

For example, as a user interacts with the user interface 110 through user interface elements (e.g., the video panel 112A) to cause the system 100 to navigate to a particular chapter (i.e., time segments) for video playback, the guided content panel 112B will be updated to present the relevant guided content 106 (i.e., summary of the chapter). A user can quickly read the summary of the chapter to decide if this portion of the video 102 is of interest and, if not, the user can cause the system 100 to navigate to another chapter for video playback.

In some implementations, during video playback, if a user input includes selection of a particular question prompt for the particular time segment in the user interface 110, in response to receiving the user input, the system 100 presents the corresponding response in the user interface.

For example, given a user input that selects "Question Prompt 2" (i.e., a particular question prompt) for chapter 1 (i.e., for the particular time segment) in the user interface 110, FIG. 1 shows the guided content panel 112B of the interface 110 presenting the corresponding response (i.e., "Response to Question Prompt 2") in the user interface 110.

Because the user does not have to generate the question prompt, the user can more quickly receive relevant content and return to the video playback. Thus, total playback time of the video 102 is minimized and therefore total computational cost of video playback is minimized.

Generally, the user interface 110 can include one or more user interface elements that allow the user to submit queries about the video while the video is presented for playback.

For example, FIG. 1 shows the guided content panel 112B includes an input field (i.e., the input field with the placeholder text "Ask a follow up ...") for which the user can click on the input field and then type in the input field to submit natural language text queries regarding the video.

When the system 100 receives a user query, the system 100 can generate and present a response to the user query. That is, in some implementations, the system 100, through the one or more user interface elements, receives a user query. Then, the system 100 generates an input that includes the user query and context from the video 102. Afterwards, the system 100 provides the input that includes the user query and context from the video 102 to a second multi-modal neural network 116 (e.g., as input 114) to obtain, as output (e.g., as output 118), a response to the user query. Then, the system 100 provides the response for presentation in one of the user interface elements (e.g., the system presents the response to the query in the guided content panel 112B).

The second multi-modal neural network 116 can have any of a variety of neural network architectures. In some cases, the second multi-modal neural network 116 is configured to operate at a lower computational cost than the first multi-modal neural network 104. That is, the second neural network 116 can process the same types of inputs to generate the same types of outputs as the first multi-modal neural network 104 but generating the outputs using the second multi-modal neural network 116 is computationally more efficient (i.e., the second multi-modal neural network 116 has a lower memory footprint, requires fewer floating point operations to generate outputs, and/or has shorter inference time).

Using both the first multi-modal neural network 104 and the second multi-modal neural network 116 makes the system 100 computationally efficient. The system 100 maximizes the quality of the guided contents 106 because it uses the first multi-modal neural network 104 (which can be a larger, slower, but a better performing neural network) to pre-compute the guided content 106. The higher the quality of guided content 106, the less likely the user will need to submit queries, thus saving computational processing. At the same time, the system 100 minimizes its latency in response to real-time user queries by using the second multi-modal neural network 116 (which can be smaller, but faster neural network) to generate responses to user the submitted queries in real-time (and, as will be described below, generate additional question prompts, respective responses to the additional question prompts in real-time).

Generally, video context can include any data related to the video 102. For example, the context from the video can include metadata of the video 102, e.g., video title, video description, video creation date, video creator, and so on. As another example, the context can include portions of the video 102, e.g., selected video frames of the video, selected audio clips of the video, selected portions of transcript of the video, and so on.

In some cases, system 100 can expand the input that includes the user query and context from the video 102 with one or more previous user queries, one or more previous responses to the one or more previous user queries, or both.

Because the system 100 processes user submitted queries about the video 102 using an input that includes the context of the video 102 playback and the user's previous interaction with the video 102 playback (e.g., previous user queries and response), processing user queries in this manner improves user video playback experience for the user, by providing responses to the queries that are tailored to the user and video context.

In some implementations, the system 100 can receive user input selecting content that is presented in the user interface 110 and, in response to receiving the user input selecting content, the system 100 presents one or more additional question prompts in the user interface 110.

That is, during playback of the video 102 by a user on a user device, the system 100 can receive a user input selecting content that is presented in the user interface 110. The system 100 can then generate an input (e.g., as 114) that includes the selected content and context from the video 102. The system 100 then provides the input that includes the selected content and context from the video 102 to a second multi-modal neural network 116 to obtain, as output (e.g., as 118), one or more additional question prompts relating to the selected content. Then, the system 100 provides the one or more additional question prompts for presentation in the user interface 110.

Generally, the content a user can select is any displayed data in the user interface. For example, displayed text (e.g., video title, video description text, text belonging to guided content, e.g., text belonging to a summary, question prompts, and responses to question prompts).

For example, a user can select text in the video panel 112A (e.g., the video title, video description, video captions, and so on), or the user can select text in the guided content panel 112B (e.g., summary of the time segment, question prompts, responses to question prompts, and so on). Then the system 100 can generate one or more additional questions prompts given the text selection and present the additional question prompts in the user interface 110.

In some cases, the system 100 can expand the input that includes the selected content and context from the video 102 to include one or more previous user queries, one or more previous responses to the one or more previous user queries, or both.

Processing user inputs in this manner improves user video playback experience, by providing relevant additional question prompts that are tailored to the user and video context without the need for the user to come up with and input a complete query.

When the system 100 receives a user input selecting one of the additional question prompts, the system 100 can generate and present a response to the additional question prompt. That is, the system 100 can receive a user input selecting one of the additional question prompts. Then the system can generate an input (e.g., as 114) that includes the selected additional question prompt and context from the video 102. Afterwards, the system 100 can provide the input that includes the selected additional question prompt and context from the video 102 to the second multi-modal neural network 116 to obtain, as output (e.g., as 118), one or more responses to the additional question prompt. Then, the system 100 provides the one or more responses to the additional question prompt for presentation in the user interface 110.

Generating responses by processing an in input that includes the additional question prompt and the relevant video context also enhances the user experience by providing relevant responses to additional question prompts that are tailored to the user and video context.

Overall, FIG. 1 shows a system 100 that enhances both the user experience during video 102 playback and the computational efficiency of interactive guided video presentation.

For example, because the system 100 pre-computes guided content 106 prior to video 102 presentation, the system 100 lowers the latency of presenting guided content 106 during video 102 playback. Also, the system 100 eliminates wasteful regeneration of guided content 106 per video 102 playback because guided content 106 can be generated once per video 102 and then stored in system maintained data.

As another example, the presentation of guided content 106 by the system 100 increases computational efficiency through the reduction of wasted CPU cycles. That is, because guided content 106 helps deliver relevant content to the user during video 102 playback, a user no longer needs to pause or rewind video 102 presentation, thus the system 100 avoids video 102 reprocessing that occurs when a user pauses and rewinds a video 102.

Also, the system 100 generation and presentation of additional question prompts, respective responses to additional question prompts, and responses to user queries during video 102 playback that takes into account video 102 context and previous user interactions (e.g., previous user queries) provide the user with additional relevant, tailored, content, further enhancing the user video playback experience.

In some implementations, the system 100 is included in the execution of a greater task, such as computer-aided spatiotemporal object recognition (i.e., object detection and question-answering of object spatial arrangement through the use of interactive guided video presentation) and computer-aided procedural execution for a user (e.g., repairing or assembling machinery according to interactive guided video presentation). Generally, the greater task can be any task that utilizes interactive guided video presentation by the system 100 as described above. Further details of examples follow.

For example, in some implementations, the system 100 can be used for spatial question and answering. That is, the video 102 can be a video of a scene in an environment and the system 100 processes queries that include spatial reasoning questions, where spatial reasoning questions can be (i) part of pre-computed guided content 106 (e.g., the question prompt of a question prompt - response pair, as described above), (ii) a user submitted query during video playback, (iii) or both. The spatial reasoning question can identify a spatial property that characterizes respective 3D positions of one or more of a set of objects (such as a distance between two of the objects) depicted in the video and the response to the query identifies a value of the spatial property. In some implementations, the spatial reasoning question is a quantitative spatial reasoning question.

As another example, in some implementations of the system 100, the system 100 can be used for object detection. That is, the video 102 can be a video of a scene in an environment and the system 100 processes queries that include object detection queries, where object detection queries can be (i) part of pre-computed guided content 106 (e.g., the question prompt of a question prompt - response pair, as described above), (ii) a user submitted query during video playback, (iii) or both. The object detection query can specify a class of object (such as a "person," "vehicle," or a specific type of "manufacturing component") to be identified within the video, and the response to the query identifies one or more instances of the specified object class depicted in the video. In some implementations, the response is a quantitative response that provides a count of the detected instances and can further provide location data, such as a description of location relative to the depicted scene, for each detected instance within one or more frames of the video 102.

As a particular example of computer-aided spatiotemporal object recognition, the greater task can be a diagnostic analysis of a previously recorded manufacturing process, where the diagnostic analysis includes the use of an interactive video presentation system. In this context, video data constitutes a log of internal states that prevailed in a manufacturing system (e.g., the recorded positions, speeds, and actions of a robotic arm in a manufacturing environment over time). The system 100 can receive data indicative that an issue has occurred with the manufactures process (e.g., the usual path of motion of a robotic arm is blocked), triggering the system 100 to automatically begin an interactive guided video presentation of recent video recording of the manufacturing system that enables a user to diagnose the issue. During interactive guided video presentation by the system 100, the user can submit queries to the system 100 that are spatial questions and/or object detection queries for the video. The system 100, in response, performs a computer vision analysis (e.g., through the processing of user submitted queries and video context using the second multi-modal neural network to generate responses to the queries) that enables the user to properly diagnose the manufacturing issue by receiving responses to these queries. For example, the user can submit a query regarding the identification of objects that are blocking a robotic arm and what distance they are to the arm that may have caused the issue, and the system 100 can provide a response to these queries that enables to user to determine an object is blocking the robotic arm and causing the issue.

As another example, in some implementations of the system 100, the video 102 can be a video explaining procedural execution of a process, and the user of the user device of the video 102 can perform the process in the video 102 in accordance with the video 102, the guided content 106, and user queries submitted to the system 100.

As a particular example of computer-aided procedural execution for a user, the greater task can be the repair of a machinery, e.g., a hydraulic pump. The repair of the hydraulic pump includes an interactive guided video presentation system 100 that is communicatively coupled to the hydraulic pump. The system 100 receives data indicative of an internal state prevailing in the hydraulic pump, for instance, a pressure reading exceeding a predetermined safety threshold. In response to this specific internal state, the system 100 automatically begins interactive guided video presentation that enables a user to properly repair this hydraulic pump by guiding them through the correct physical procedure to resolve the over-pressure condition, thereby restoring the pump to its normal operational state. That is, the system 100 in response to the specific internal state (i.e., the high pressure reading) obtains an appropriate video from system maintained data and begins playback of the video by a user on a user device as described above. The system 100 video playback is providing guidance to the user and allows the user to comprehensively understand how to perform the repair through guided content 106 (such as summaries and question prompts for key steps of the repair), while also answering any real-time questions the user has regarding the repair (through, e.g., processing of user submitted queries along with video context and previous user queries in real-time).

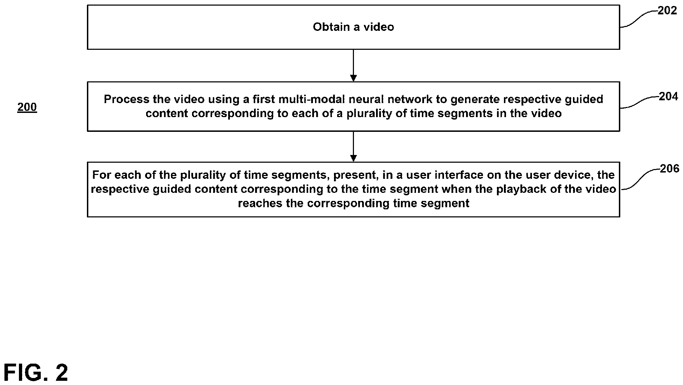

FIG. 2 is a flow diagram of an example process 200 for processing a video to generate respective guided content and then presenting the respective guided content during playback of the video by a user. For convenience, the process 200 will be described as being performed by a system of one or more computers located in one or more locations. For example, an interactive video guiding system, e.g., the interactive video guiding system 100 of FIG. 1, appropriately programmed in accordance with this specification, can perform the process 200.

The system obtains a video (step 202). The system can obtain the video from any of a variety of sources.

For example, the system can obtain the video from system-maintained data. As another example, the system can obtain the video from a user or another system through any of a variety of methods, e.g., using a network connection, e.g., a cloud-based network, the internet, or a local network.

The system processes the video using a first multi-modal neural network to generate respective guided content corresponding to each of a plurality of time segments in the video (step 204).

As described above, the first multi-modal neural network can have any of a variety of neural network architectures. That is, the first multi-modal neural network can have any appropriate architecture in any appropriate configuration that can process a multi-modal input generate a multi-modal output, including fully connected layers, convolutional layers, recurrent layers, attention-based layers, and so on, as is appropriate. As part of step 204, the system will use the first multi-modal neural network to process a video to generate respective guided content corresponding to each of a plurality of time segments in the video.

Generally, the system can process video, image, text, and audio data of an input to the first multi-modal neural network by first processing the data of the input using appropriate feature encoders to generate features that are then further processed using the first multi-modal neural network.

For example, for a first multi-modal neural network input that includes natural language text, the system can map each character, word, or sub-word of the natural language text representation to a corresponding token by applying a text tokenizer to the input text. For example, the system can apply the Byte-Pair Encoding (BPE), WordPiece, or SentencePiece tokenizers to divide the natural language text data into tokens from a vocabulary. The system can then process the token sequence with a feature encoder neural network that is a text encoder (e.g., word2vec, GloVe, or BERT) to generate a sequence of features.

As another example, for a first multi-modal neural network input that includes an audio signal (e.g., audio clip), the system can convert an audio signal into a spectrogram and map segments (i.e., frequency, time patches of the spectrogram) to corresponding tokens and apply a feature encoder neural network that is an audio encoder neural network, e.g., using w2v-BERT model as described in arXiv:2108.06209, to obtain features for each map segment token.

As another example, for a first multi-modal neural network input that includes an image, the system can divide the image into blocks. Then the system can map each block to a corresponding token, e.g., by projecting each block into a token embedding. Then, the system can use a feature encoder neural network that is an image encoder, e.g., using the pre-trained Align encoder (as described in arXiv:2102.05918) or the pre-trained CoCa encoder (as described in arXiv:2205.01917) to process the tokens to generate respective features.

As another example, for a first multi-modal neural network input that includes video frames, the system processes each video frame as an image and obtains a respective feature for each image as described above.

As another example, for a first multi-modal neural network input that includes a video, the system can divide the video into a sequence of video frames and divide each video frame into patches and map each patch to a corresponding token. Alternatively, a token can represent a spatio-temporal portion of the video, i.e., a spatial portion of a group of video frames. The system can then use a feature encoder neural network that is a video encoder neural network, e.g., use the ViViT encoder as described in arXiv:2103.15691, to process the tokens and generate a respective feature for each token. Then, for each video frame (or group of video frames), the system can attention pool the features associated with the corresponding tokens of the video frame (or group of video frames) to obtain a feature for the video frame (or group of video frames).

In some cases, the first multi-modal neural network is a pre-trained neural network (i.e., the system or another system has previously determined the values of the trainable parameters of neural network through training on large data sets for one or more general tasks, e.g., next token prediction, image captioning, text-image alignment, and so on).

In some cases, the first multi-modal neural network processes a sequence of tokens to generate, as output, a sequence of tokens from a vocabulary, and the tokens can represent any modality of data such as text, image, audio, video and so on. For example, the first multi-modal neural network can be one that belongs to the Gemini family of neural networks, the Gemma family of neural networks, the PaliGemma family of neural networks, and so on.

As a particular example, when the input to the first multi-modal neural network includes video frames, corresponding audio clips, and natural language text instructions regarding the video frames, the system can use the Gemini 1.5 Pro multi-modal neural network to process the video frames (using an image encoder as described above), the audio clips (using an audio encoder as described above) and instructions (using a text encoder as described above) to generate guided content (e.g., natural language text representation of summaries, prompt questions, and responses to the prompt questions).

In some situations, the first multi-modal neural network can be referred to as an auto-regressive neural network when the first multi-modal neural network auto-regressively generates an output sequence of tokens. More specifically, the auto-regressively generated output is created by generating each particular token in the output sequence conditioned on a current input sequence that includes any tokens that precede the particular token in the output sequence, e.g., the tokens that have already been generated for any previous positions in the output sequence that precede the particular position of the particular token.

For example, the first multi-modal neural network can be an auto-regressive Transformer-based neural network that includes (i) a plurality of attention blocks that each apply a self-attention operation and (ii) an output subnetwork that processes an output of the last attention block to generate the score distribution.

In this example, the first multi-modal neural network can have any of a variety of Transformer-based neural network architectures. Examples of such architectures include those described in J. Hoffmann, S. Borgeaud, A. Mensch, E. Buchatskaya, T. Cai, E. Rutherford, D. d. L. Casas, L. A. Hendricks, J. Welbl, A. Clark, et al. Training compute-optimal large language models, arXiv preprint arXiv:2203.15556, 2022; J.W. Rae, S. Borgeaud, T. Cai, K. Millican, J. Hoffmann, H. F. Song, J. Aslanides, S. Henderson, R. Ring, S. Young, E. Rutherford, T. Hennigan, J. Menick, A. Cassirer, R. Powell, G. van den Driessche, L. A. Hendricks, M. Rauh, P. Huang, A. Glaese, J. Welbl, S. Dathathri, S. Huang, J. Uesato, J. Mellor, I. Higgins, A. Creswell, N. McAleese, A.Wu, E. Elsen, S. M. Jayakumar, E. Buchatskaya, D. Budden, E. Sutherland, K. Simonyan, M. Paganini, L. Sifre, L. Martens, X. L. Li, A. Kuncoro, A. Nematzadeh, E. Gribovskaya, D. Donato, A. Lazaridou, A. Mensch, J. Lespiau, M. Tsimpoukelli, N. Grigorev, D. Fritz, T. Sottiaux, M. Pajarskas, T. Pohlen, Z. Gong, D. Toyama, C. de Masson d'Autume, Y. Li, T. Terzi, V. Mikulik, I. Babuschkin, A. Clark, D. de Las Casas, A. Guy, C. Jones, J. Bradbury, M. Johnson, B. A. Hechtman, L. Weidinger, I. Gabriel, W. S. Isaac, E. Lockhart, S. Osindero, L. Rimell, C. Dyer, O. Vinyals, K. Ayoub, J. Stanway, L. Bennett, D. Hassabis, K. Kavukcuoglu, and G. Irving. Scaling language models: Methods, analysis & insights from training gopher. CoRR, abs/2112.11446, 2021; Colin Raffel, Noam Shazeer, Adam Roberts, Katherine Lee, Sharan Narang, Michael Matena, Yanqi Zhou, Wei Li, and Peter J Liu. Exploring the limits of transfer learning with a unified text-to-text transformer. arXiv preprint arXiv:1910.10683, 2019; Daniel Adiwardana, Minh-Thang Luong, David R. So, Jamie Hall, Noah Fiedel, Romal Thoppilan, Zi Yang, Apoorv Kulshreshtha, Gaurav Nemade, Yifeng Lu, and Quoc V. Le. Towards a human-like open-domain chatbot. CoRR, abs/2001.09977, 2020; and Tom B Brown, Benjamin Mann, Nick Ryder, Melanie Subbiah, Jared Kaplan, Prafulla Dhariwal, Arvind Neelakantan, Pranav Shyam, Girish Sastry, Amanda Askell, et al. Language models are few-shot learners. arXiv preprint arXiv:2005.14165, 2020.

Generally, to apply the self-attention operation, each attention block uses one or more attention heads. Each attention head generates a set of queries, a set of keys, and a set of values, and then applies any of a variety of variants of query-key-value (QKV) attention, e.g., a dot product attention function or a scaled dot product attention function, using the queries, keys, and values to generate an output. Each query, key, value can be a vector that includes one or more vector elements. When there are multiple attention heads, the attention block then combines the outputs of the multiple attention heads, e.g., by concatenating the outputs and, optionally, processing the concatenated outputs through a linear layer.

As described above, a time segment of a video is a time interval (i.e., a window of time between a start time and an end time) of a portion of the video.

As described above, in some implementations, the system determines data specifying the plurality of time segments in the video based on metadata of the video. For example, the system can receive the video and the video metadata from a user (or another system), where the user (or the other system) includes the data specifying the plurality of time segments in the video in the metadata. For example, metadata of the video can include a list of time intervals that correspond to video chapters or segments within the video.

In some implementations, the system determines data specifying the plurality of time segments in the video using the first multi-modal neural network.

For example, the system can process an input that includes the video using the first multi-modal neural network to generate data specifying the plurality of time segments. As a particular example, the system can process an input that includes the video (i.e., all video frames of the video, a sampled subset of video frames of the video, or a selected subset of video frames of the video) along with other context from the video (e.g., audio accompanying included video frames, video title, video description, and so on) and natural language instructions of how to determine the time segments, which enables customizable time segmentation, to determine the time segments of the video.

As a particular example, for educational videos (e.g., whiteboard lectures, webinars, interviews, tutorials) the input used to generate data specifying the many time segments can include natural language instructions to create time segments that correspond to key topics presented in the video. To illustrate, a tutorial video of how to use a toolkit to develop mobile applications can have time segments aligned with key topics, e.g., development environment, debugging tools, deployment, etc.

As another particular example, for entertainment videos, e.g., movies, tv-shows, animated films, the input used to generate data specifying the many time segments can include natural language instructions to create time segments that correspond to key story-line events. To illustrate, a movie can have time segments aligned with key story-line events, e.g., introduction, conflict, journey through the protagonist's mind, climax, resolution.

In some cases, the system generates data specifying the plurality of time segments by processing an input that includes a transcript of the video using the first multi-modal neural network.

The system can obtain the transcript of the video using any of a variety of methods.

For example, the system can obtain the transcript as part of the video metadata. For example, the system can receive the video and the video metadata from a user (or another system), where the user (or the other system) includes the transcript for the video in the metadata.

As another example the system can generate the transcript for the video.

For example, the system can perform automatic speech recognition (ASR) on the video using a neural network (e.g., using the first neural network, or using a different task neural network) to generate the transcript. Optionally, the system can then, to recover potentially incomplete sentences and missing punctuation, use another neural network (e.g., BERT) or rules-based algorithms to further process the transcript.

In some implementations, as part of processing an input that includes a transcript of the video using the first multi-modal neural network to generate data specifying the plurality of time segments, the system obtains, as output from the first neural network, data identifying a respective portion of the transcript (e.g., set of sentences) to be included in each of the time segments. Then, for each time segment, the system maps the respective portion of the transcript (e.g., set of sentences) to a corresponding time interval within the video. In other words, the system maps the text included in the transcript to corresponding time segments in the video.

In some cases, the respective guided content corresponding to each of the plurality of time segments includes a summary of the video during the time segment.

For example, given a video titled "What's new in sports | Episode 1| horse racing" regarding sports news and a time segment that corresponds to a portion of the video that introduces the episode series, the summary for the time segment can be "Sports journalist announces a new series about the most popular sports featuring the latest news on horse racing."

In some implementations, as part of step 204, the system, for one or more of the time segments, processes an input that includes the video during the time segment using the first multi-modal neural network to generate the respective summary of the time segment.

For example, the system can process an input that includes the video during the time segment (i.e., all video frames during the time segment, a subset of selected video frames during the time segment, a subset of sampled video frames during the time segment).

As a particular example, the input can include instructions to generate a summary followed by the video that belong to the time segment. For example, "Summarize this video under 100 words as one paragraph. Use a pleasant tone: [video]" where [video] is a placeholder for the video (i.e., video frames) during the time segment. More specifically, [video] can be a placeholder for video frames (e.g., selected video frames or sampled video frames), video audio clips (e.g., audio clips accompanying any included video frames), video title, video description, video creation date, and so on.

In some implementations, as part of step 204, the system, for one or more of the time segments, processes an input that includes a text transcript of the video during the time segment using the first multi-modal neural network to generate the respective summary of the time segment.

For example, the system can map sentences included in the text transcript to corresponding time intervals within the video (as described above). Then, the system can process the sentences belonging to the time segment as an input sequence using the first multi-modal neural network to generate an output sequence (as described above) that represents the summary of the video during the time segment.

As a particular example, the input can include instructions to generate a summary followed by the sentences that belong to the time segment. For example, "Summarize this text under 100 words as one paragraph. Use a pleasant tone: [text]" where [text] is a placeholder for the text transcript of the video during the time segment.

For a first time segment that corresponds to the entire time interval of the video, the system can processes an input that includes the entire video using the first multi-modal neural network to generate a summary of the entire video.

As a particular example, the input can include instructions to generate a summary. For example, "I'm watching this video [video] Summarize this video under 100 words as one paragraph. Use a pleasant tone to help me watch the video" where [video] is a placeholder for the entire video. More specifically, [video] can be placeholder for video frames (e.g., selected video frames or sampled video frames), video audio clips (e.g., audio clips accompanying any included video frames), video title, video description, video creation date, and so on.

In some cases, the respective guided content corresponding to each of the plurality of time segments includes one or more question prompts that relate to content of the video during the time segment.

For example, given the previous example video titled "What's new in sports | Episode 1| horse racing" and the previous example time segment that corresponds to a portion of the video that introduces the episode series, example question prompts can be "What is the purpose of the sports highlight series?" or "What topics will be covered in the series?"

In some implementations, as part of step 204, the system, for one or more of the time segments, processes an input that includes the video during the time segment using the first multi-modal neural network to generate the respective one or more question prompts for the time segment.

For example, the system can process an input that includes the video during the time segment (i.e., all video frames during the time segment, a subset of selected video frames during the time segment, a subset of sampled video frames during the time segment).

As a particular example, the input can include instructions to generate one or more question prompts for the time segment followed by the video that belongs to the time segment. For example, "Generate two interesting question prompt from this video: [video]" where [video] is a placeholder for the video (i.e., video frames) during the time segment. More specifically, [video] can be a placeholder for video frames (e.g., selected video frames or sampled video frames), video audio clips (e.g., audio clips accompanying any included video frames), video title, video description, video creation date, and so on.

In some implementations, as part of step 204, the system, for one or more of the time segments, processes an input that includes a text transcript of the video during the time segment using the first multi-modal neural network to generate the one or more question prompts for the time segment.

For example, the system can map sentences included in the text transcript to corresponding time intervals within the video (as described above). Then, the system can process the sentences belonging to the time segment as an input sequence using the first multi-modal neural network to generate an output sequence (as described above) that represents one or more question prompts for the time segment.

As a particular example, the input can include instructions to generate one or more question prompts for the time segment followed by the sentences belong to the time segment. For example, "Generate two interesting question prompts from this text: [text]" where [text] is a placeholder for the text transcript of the video during the time segment.

For a first time segment that corresponds to the entire time interval of the video, the system can processes an input that includes the entire video using the first multi-modal neural network to generate one or more question prompts for the entire video.

As a particular example, the input can include instructions to generate one or more question prompts. For example, "I'm watching this video [video]. Generate two interesting question prompts from this video to help me watch." where [video] is a placeholder for the entire video. Or, as described above, [video] can be placeholder for video frames (e.g., selected video frames or sampled video frames), video audio clips (e.g., audio clips accompanying any included video frames), video title, video description, video creation date, and so on.

In some cases, when the respective guided content corresponding to each of the plurality of time segments includes one or more question prompts that relate to content of the video during the time segment, the respective guided content corresponding to each of the plurality of time segments further includes a respective response to each of the one or more question prompts.

In some cases, to generate the respective response to each of the one or more question prompts, the system generates the respective responses when the system generates the one or more question prompts.

For example, when the system processes an input that includes a text transcript of the video during the time segment using the first multi-modal neural network to generate the one or more question prompts for the time segment, the input can further include instructions to generate the responses to the one or more question prompts.

As another example, when the system processes an input that includes a text transcript during the time segment and associated and video frames using the first multi-modal neural network to generate the one or more question prompts for the time segment, the input can further include instructions to generate the responses to the one or more question prompts based on the video frames.

These cases when the system generates the respective responses at the same time that the system generates the one or more question prompts has the advantage of minimizing the amount of computational processing needed to generate the guided content. For example, the system will process the text transcript for each time segment to generate the question prompts and respective responses for the time segment once.

The system, for each of the plurality of time segments, presents, in a user interface on the user device, the respective guided content corresponding to the time segment when the playback of the video reaches the corresponding time segment (step 206).

As described above, the user device can be any of a variety of user devices that can perform video playback and present guided content. For example, the user device can be a smartphone, a laptop, a desktop computer, a tablet, and so on.

Generally, the user interface on the user device is the point of interaction between a user and the system. That is, the user interface on the user device is any aspect of the user device that can at least present guided content to the user and video playback. For example, for a user device that is a smartphone, the user interface is the smartphone touchscreen; for a laptop, the laptop display; tablet, tablet touchscreen; and so on.

In some implementations, when the respective guided content corresponding to each of the plurality of time segments includes a summary of the video during the time segment, as part of step 206, the system presents the respective summary of the time segment.

In some cases, when the respective guided content corresponding to each of the plurality of time segments includes one or more question prompts that relate to content of the video during the time segment, as part of step 206, the system presents the one or more question prompts.

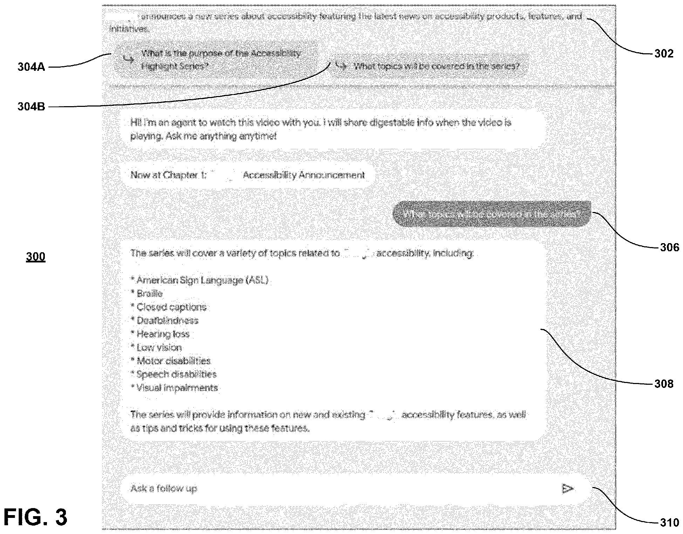

As a particular example, FIG. 3 shows an example 300 of presented guided content on a laptop display user interface (e.g., the laptop display user interface 110 of FIG. 1) that includes a summary 302 and two question prompts (i.e., 304A and 304B) for the video during playback of the relevant time segment. In particular, the playback of the video (not displayed in FIG. 3) is at a time segment corresponding to the beginning of the video (referred to as "Chapter 1"), and the system presents a message to the user stating that the video is at Chapter 1 while also presenting the summary 302 and the question prompts (304A and 304B).

In some implementations, after the system presents the one or more question prompts, the system can present the respective responses to the one or more question prompts. That is, when the respective guided content corresponding to each of the plurality of time segments includes one or more question prompts and further includes a respective response to each of the one or more question prompts, after the system presents the one or more question prompts, as part of step 206, the system can receive a user input selecting a particular question prompt for a particular time segment. Then, in response to receiving the user input, the system can present, in the user interface, the respective response to the particular question prompt.

As a particular example, FIG. 3 shows an example 300 of presented guided content on a laptop display user interface (e.g., the laptop display user interface 110 of FIG. 1) that includes a selected particular question prompt 306 for a particular time segment (in this example "Chapter 1" as described above) and the respective response 308 to the selected particular question prompt 306.

In some implementations, the user interface includes one or more user interface elements that allow the user to submit queries about the video while the video is presented for playback.

For example, an interface element can be an input field for a user to submit natural language text that represents a query. As a particular example, example 300 includes an input field 310.

As another example, an interface element can be a button that triggers an audio recording for a user to submit natural language speech that represents a query. Optionally, the system can apply automatic speech recognition (using, e.g., the first multi-modal neural network or another task neural network) to the audio recording to generate a natural language text representation of a query.

In some implementations, the system receives, through the one or more user interface elements, a user query. The system then generates an input that includes the user query and context from the video. Afterwards, the system provides the input that includes the user query and context from the video to a second multi-modal neural network to obtain, as output, a response to the user query. Then, the system provides the response for presentation in one of the one or more user interface elements.

As described above, the second multi-modal neural network can have any of a variety of neural network architectures. That is, the second multi-modal neural network can have any appropriate architecture in any appropriate configuration that can process an multi-modal input to generate a multi-modal output, including fully connected layers, convolutional layers, recurrent layers, attention-based layers, and so on, as is appropriate. For example, as described above, the system can use the second multi-modal neural network to process input that includes the user query and context from the video to generate a response to the user query.

Generally, the second multi-modal neural network can have any of the example architecture described above with respect to the first multi-modal neural network.

In some cases, the second multi-modal neural network is a smaller neural network (in terms of memory cost, number of parameters, etc.) than the first multi-modal neural network. That is, the second multi-modal neural network can offer faster inference and more efficient memory usage than the first multi-modal neural network, which allows the system to use the second multi-modal neural network to generate responses to user queries during video playback in real-time.

For example, the second multi-modal neural network can have fewer parameters than the first multi-modal neural network (e.g., fewer layer blocks, fewer layers per layer block, fewer neurons per layer, etc.) smaller internal representation dimension, and fewer attention heads per attention layer. All these features can contribute to the second multi-modal neural network having a smaller memory footprint and shorter latency for output generation.

Generally, the context from the video can include any data related to the video. For example, the context from the video can include metadata of the video, e.g., video title, video description, video creation date, video creator, and so on. As another example, the context can include portions of the video, e.g., selected video frames of the video, selected audio clips of the video, selected portions of transcript of the video, and so on.

As a particular example of an input that includes the user query and context from the video, an input can include the natural language text "The user is now watching a video titled [title]. The video was published in [year] on [source name]. The user asks: [question]. Answer the user's query under 100 words", where [title], [year], [source name] represent placeholders for video context, and [question] is place holder for the user query.

By incorporating the video context in the input to generate a response to a user query, the system grounds the generation of the response to be relevant and informative. For example, a character's name mentioned in a video can refer to different entities outside the video, but providing video context (portions of video, or video metadata such as the video title and description) grounds the generation of the response to refer to the character in the video.

In some cases, the input that includes the user query and context from the video incorporates one or more prompting techniques (e.g., zero-shot prompting, few-shot prompting, chain-of-thought prompting, role prompting, instruction prompting, rewriting or refining prompts, output constraints, self-consistency prompting, tool-use prompting, contextual priming, and so on).

As a particular example, the input can include role prompting such as "You are a smart agent that provides assistive information for users when watching a video. You provide answers based on the video transcript, title, channel, and year. Your answers should consider the video content." prior to the above example input "The user is now watching a video titled [title]. The video was published in [year] on [source name]. The user asks: [question]. Answer the user's query under 100 words".

Incorporating prompting techniques in the input can help guide the generation of the response to the query to be appropriate length and to utilize relevant information.

Further in some implementations, the input that includes the user query and context from the video further includes one or more previous user queries, one or more previous responses to the one or more previous user queries, or both.

As a particular example, for a cookie baking tutorial video, consider a first query of "How much butter is being added?" with a first response of "One stick of butter" based on the video context that includes video frames displaying one stick of butter followed by a second query "Can I replace it with olive oil?". The system can process the second query along with the video context and the user's first query - first response pair to provide a second response to the second query of "You can replace 1 stick of butter with half a cup of oil when baking cookies." The described techniques use the context of the video playback and the user's previous interaction to determine that user is asking about replacing butter, specifically 1 stick of butter, when generating this second response.

By including one or more previous user queries in the input, the system can generate a more precise and relevant response for the user.

In some implementations, during video playback, the system can present one or more additional question prompts in the user interface based on user selected content. That is, during playback of the video by a user on a user device, the system can receive a user input selecting content that is presented in the user interface. Afterwards, the system can generate an input that includes the selected content and context from the video. Then, the system can provide the input that includes the selected content and context from the video to a second multi-modal neural network to obtain, as output, one or more additional question prompts relating to the selected content. The system can then provide the one or more additional question prompts for presentation in the user interface.

The selected content can be any content presented to the user. For example, the selected content can include guided content (e.g., a summary, a question prompt, a respective response to the question prompt) corresponding to a time segment in the video.

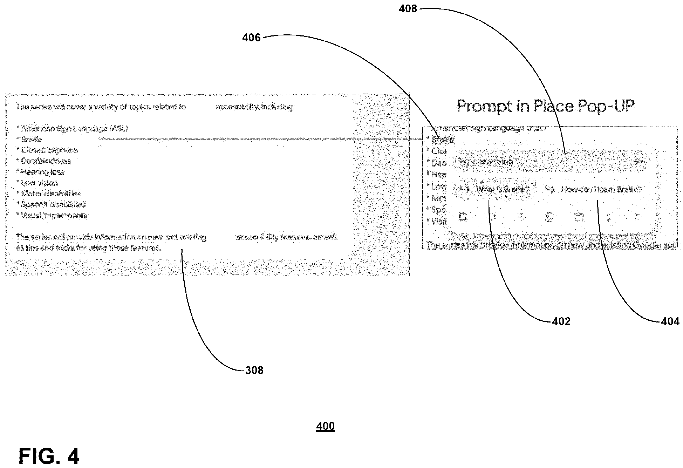

As a particular example, FIG. 4 shows an example 400 of the presented additional question prompts (i.e., 402 and 404) on a laptop display user interface (e.g., the laptop display user interface 110 of FIG. 1). In particular, example 400 includes a presentation of guided content (i.e. the respective response 308 to the selected particular question prompt 306 of example 300 of FIG. 3) of which the selected content 406 is the word "Braille". The system generates an input that includes the selected content 406 (along with context from the video) and processes the input using the second multi-modal neural network to obtain the question prompt "What is Braille?" 402 and the question prompt "How can I learn Braille" 404. The system then presents the question prompts 402 and 404 in a "prompt in place pop up window" near the selected content.

In some implementations, the selected content can be the subject of a user query and can be included in an input that the system processes using the second multi-modal neural network to generate a response to the query. That is, in some implementations, the system receives a user input selecting content that is presented in the user interface and, through the one or more user interface elements, a user query. Then the system generates an input that includes the user query, the selected content, and context from the video. Afterwards, the system provides the input that includes the user query and context from the video to a second multi-modal neural network to obtain, as output, a response to the user query. Then lastly the system provides the response for presentation in one of the one or more user interface elements.

As a particular example, example 400 shows that the pop up window provides a new user interface element 408 as an input field that allows the user to submit queries about the video regarding the selected content 406 while the video is presented for playback.

Further in some implementations, the input (that includes the selected content and context from the video that the system provides to the second multi-modal neural network to obtain one or more additional question prompts relating to selected content) further includes one or more previous user queries, one or more previous responses to the one or more previous user queries, or both.

Including previous user queries and/or responses in the input enhances relevance of the generated additional question prompts to the user because the second multi-modal neural network can use the previous user queries and/or responses to generate more relevant additional question prompts for the user.

For example, given a video that includes a review of various smart phone models, if the selected content represents a particular smartphone model, e.g., "smart phone model 2000", the input can further include a previous user query regarding the price of another smart phone model, "What is the price of smart phone model 1999?" which can result in an additional question prompt such as "What is the price of smart phone model 2000?". Given that the user is interested in the price of one smartphone, the system generates an additional question prompt that is likely to be relevant to the user.

In some implementations, after the system provides one or more additional question prompts for presentation in the user interface, the system can receive a user input selection of one of the additional question prompts and, in response, the system presents one or more responses to the selected additional question prompt.

In other words, the system receives a user input selecting one of the additional question prompts. The system then generates an input that includes the selected additional question prompt and context from the video. Afterwards, the system provides the input that includes the selected additional question prompt and context from the video to the second multi-modal neural network to obtain, as output, one or more responses to the additional question prompt. Then lastly, the system provides the one or more responses to the additional question prompt for presentation in the user interface.

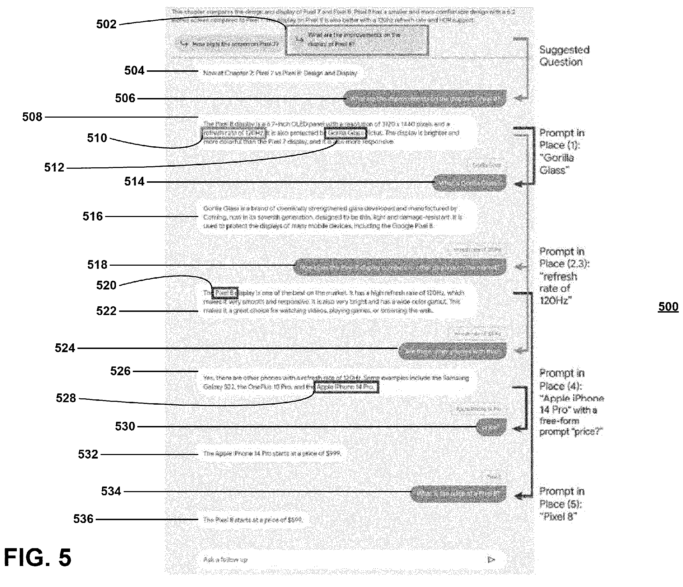

FIG. 5 shows an example 500 of presented guided content (e.g., summary, question prompts, responses to the question prompts), additional question prompts, and responses to the additional question prompts on a laptop display user interface (e.g., the laptop display user interface 110 of FIG. 1).

In particular, example 500 shows the result of the system, during video playback, presenting guided content and receiving multiple user inputs (e.g., selection of question prompts, selection of content, selection of additional question prompts, and so on).

What follows is a high level overview of how the system generates example 500. The video playback reaches a particular time segment of the video (denoted as "Chapter 2"). The system presents a summary of chapter 2 and two question prompts regarding chapter 2. The user selects one of the question prompts 502, and the system presents a response 504 to the selected question prompt 502. The user selects content in the response (i.e., "Gorilla Glass") 512 which results in the system presenting additional question prompts that the user then selects one of 514. In response to the selection, the system presents a response 516 to the additional question prompt 514. The user then selects different content 510 from the earlier response 508 and the system presents additional prompts which the user selects one of 518. The system generates a response 522 to the selected additional prompt 518. Then the user selects the other additional prompt 524. The system then generates a response 526 to this selected additional prompt 524. The user selects content of the response 528 and provides a query in a pop up input field interface element. The system generates a response 532 to this user query 530. The user selects content in a previous response 522 and selects a resulting additional question prompt 534 to generate the last response 536 displayed.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a JAX framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method performed by one or more computers, the method comprising:
obtaining a video;
processing the video using a first multi-modal neural network to generate respective guided content corresponding to each of a plurality of time segments in the video; and
during playback of the video by a user on a user device and for each of the plurality of time segments, presenting, in a user interface on the user device, the respective guided content corresponding to the time segment when the playback of the video reaches the corresponding time segment.

2. The method of claim 1, wherein the respective guided content corresponding to each of the plurality of time segments comprises a summary of the video during the time segment, and wherein presenting, in a user interface on the user device, the respective guided content corresponding to the time segment when the playback of the video reaches the corresponding time segment comprises presenting the respective summary of the time segment.

3. The method of claim 2, wherein processing the video using a first multi-modal neural network to generate respective guided content corresponding to each of a plurality of time segments in the video comprises:
for one or more of the time segments, processing an input comprising a text transcript of the video during the time segment using the first multi-modal neural network to generate the respective summary of the time segment.

4. The method of claim 2 or claim 3, wherein the plurality of time segments comprises a first time segment that spans the entire video, and wherein processing the video using a first multi-modal neural network to generate respective guided content corresponding to each of a plurality of time segments in the video comprises:
for the first time segment, processing an input comprising the video to generate the respective summary of the first time segment.

5. The method of any preceding claim, wherein the respective guided content corresponding to each of the plurality of time segments comprises one or more question prompts that relate to content of the video during the time segment, and wherein presenting, in a user interface on the user device, the respective guided content corresponding to the time segment when the playback of the video reaches the corresponding time segment comprises presenting the one or more question prompts, wherein processing the video using a first multi-modal neural network to generate respective guided content corresponding to each of a plurality of time segments in the video optionally comprises:
for one or more of the time segments, processing an input comprising a text transcript of the video during the time segment using the first multi-modal neural network to generate the one or more question prompts for the time segment.

6. The method of claim 5, wherein the plurality of time segments comprises a first time segment that spans the entire video, and wherein processing the video using a first multi-modal neural network to generate respective guided content corresponding to each of a plurality of time segments in the video comprises:
for the first time segment, processing an input comprising the video to generate the one or more question prompts for the first time segment.

7. The method of claim 5 or 6, wherein the respective guided content corresponding to each of the plurality of time segments further comprises a respective response to each of the one or more question prompts, and wherein presenting, in a user interface on the user device, the respective guided content corresponding to the time segment when the playback of the video reaches the corresponding time segment comprises presenting the one or more question prompts further comprises:
receiving a user input selecting a particular question prompt for a particular time segment;
in response to receiving the user input, presenting, in the user interface, the respective response to the particular question prompt.

8. The method of any preceding claim, wherein the user interface includes one or more user interface elements that allow the user to submit queries about the video while the video is presented for playback.

9. The method of claim 8, further comprising:
receiving, through the one or more user interface elements, a user query;
generating an input that comprises the user query and context from the video;
providing the input that comprises the user query and context from the video to a second multi-modal neural network to obtain, as output, a response to the user query; and
providing the response for presentation in one of the one or more user interface elements, wherein the input that comprises the user query and context from the video optionally further comprises one or more previous user queries, one or more previous responses to the one or more previous user queries, or both.

10. The method of any preceding claim, further comprising:
during playback of the video by a user on a user device, receiving a user input selecting content that is presented in the user interface;
generating an input that comprises the selected content and context from the video;
providing the input that comprises the selected content and context from the video to a second multi-modal neural network to obtain, as output, one or more additional question prompts relating to the selected content; and
providing the one or more additional question prompts for presentation in the user interface.

11. The method of claim 10, when dependent on claim 9, wherein the input that comprises the selected content and context from the video further comprises one or more previous user queries, one or more previous responses to the one or more previous user queries, or both.

12. The method of claim 10 or claim 11, further comprising:
receiving a user input selecting one of the additional question prompts;
generating an input that comprises the selected additional question prompt and context from the video;
providing the input that comprises the selected additional question prompt and context from the video to the second multi-modal neural network to obtain, as output, one or more responses to the additional question prompt; and
providing the one or more responses to the additional question prompt for presentation in the user interface.

13. The method of any preceding claim, further comprising:
generating data specifying the plurality of time segments by processing (yet another) input that comprises a transcript of the video using the first multi-modal neural network, wherein processing (yet another) input that comprises a transcript of the video using the first multi-modal neural network optionally comprises:
obtaining, as output from the neural network, data identifying a respective set of sentences to be included in each of the time segments; and
for each time segment, mapping the respective set of sentences to a corresponding time interval within the video.

14. A system comprising one or more computers and one or more storage devices storing instructions that when executed by the one or more computers cause the one or more computers to perform the respective operations of the method of any one of claims 1-13.

15. One or more computer storage media storing instructions that when executed by one or more computers cause the one or more computers to perform the respective operations of the method of any one of claims 1-13.
